# EUROPÄISCHE PATENTSCHRIFT

(11) **EP 1 971 501 B1**
(45) Veröffentlichungstag und Bekanntmachung des Hinweises auf die Patenterteilung: **28.07.2010**
(21) Anmeldenummer: 07702667.2
(22) Anmeldetag: 10.01.2007
(51) Int. Cl.: B60J 7/14, B60J 1/18

(54) **KLAPPVERDECK FÜR EINEN KRAFTWAGEN**
FOLDING TOP FOR A MOTOR VEHICLE
TOIT DÉCAPOTABLE POUR AUTOMOBILE

(30) Priorität: 12.01.2006 DE 102006001513
(43) Veröffentlichungstag der Anmeldung: 24.09.2008
(73) Patentinhaber: Daimler AG, 70327 Stuttgart (DE)
(72) Erfinder: GUCKEL, Martin, 75242 Neuhausen (DE); SCHENK, Bernhard, 71134 Aidlingen (DE); SCHRADER, Jürgen, 71093 Weil im Schönbuch (DE)
(74) Vertreter: JENSEN & SON
(86) Internationale Anmeldenummer: PCT/EP2007/000165
(87) Internationale Veröffentlichungsnummer: WO 2007/082659

(56) Entgegenhaltungen:
- EP-A1- 0 922 597
- DE-C1- 4 038 074
- DE-C1- 4 100 240
- DE-C1- 19 807 490

## Beschreibung

Die Erfindung betrifft ein Klappverdeck für einen Kraftwagen mit einem eine Scheibenöffnung für eine Heckscheibe begrenzenden hinteren Dachteil der im Oberbegriff des Patentanspruchs 1 angegebenen Art.

Ein derartiges Klappverdeck ist bereits der DE 198 07 490 C1 oder aus DE 4038074 C1 als bekannt zu entnehmen, bei dem ein gelenkig mit einem oberen Dachteil verbundenes hinteres Dachteil aus einer Schließstellung in eine Verstaustellung innerhalb eines als Verdeckstauraum nutzbaren Kofferraums abgelegt werden kann. Das obere und das hintere Dachteil sind dabei mittels seitlich angeordneter Parallelogrammgestänge um eine karosseriefeste Hauptschwenkachse zu verlagern, welche am unteren Ende des hinteren Dachteils in Fahrzeugquerrichtung verläuft. Seitliche C-Säulen des hinteren Dachteils begrenzen außenseitig eine Heckscheibe, die nach unten hin bis auf Höhe eines Heck- und Verdeckkastendeckels und nach oben hin bis an das hintere Ende des oberen Dachteils verläuft. Die Heckscheibe ist um eine in Fahrzeugquerrichtung verlaufende Scheibenschwenkachse drehbar an den C-Säulen des hinteren Dachteils gelagert. Zur Vergrößerung des verbleibenden Kofferraumvolumens bei geöffnetem Klappverdeck wird hierdurch die Heckscheibe gegenüber dem hinteren Dachteil nach oben hin verschwenkt.

Um eine derartige Verschwenkung der Heckscheibe gegenüber dem hinteren Dachteil erreichen zu können, muss die Heckscheibe in der Schließstellung des Klappverdecks von der Innenseite her an den die Scheibenöffnung begrenzenden Randbereichen des hinteren Dachteils anliegen. Demgemäß muss auch eine Scheibendichtung auf der der Heckscheibe zugewandten Innenseite der die Scheibenöffnung begrenzenden Randbereiche des hinteren Dachteils vorgesehen werden. Um auch bei hohen Fahrgeschwindigkeiten des Kraftwagens ein dichtes Klappverdeck gewährleisten zu können, muss die Scheibendichtuhg somit konstruktiv sehr aufwendig zwischen der Innenseite des hinteren Dachteils und der Heckscheibe gestaltet werden.

Aufgabe der vorliegenden Erfindung ist es daher, ein Klappverdeck der eingangs genannten Art zu schaffen, welches konstruktiv einfacher gestaltet werden kann.

Diese Aufgabe wird erfindungsgemäß durch ein Klappverdeck mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen beschrieben.

Bei dem Klappverdeck nach der Erfindung ist es vorgesehen, dass die Heckscheibe in der Schließstellung des Klappverdecks von der Außenseite her an dem hinteren Dachteil anliegt und nach der Überführung des Klappverdecks in seine Verstaustellung zumindest mit einem Teilbereich durch die Scheibenöffnung hindurch bewegt ist. Mit anderen Worten ist also erfindungsgemäß vorgesehen, dass die Heckscheibe bei geschlossenem Klappverdeck von außen her an dem hinteren Dachteil anliegt. Hierdurch ist es auf konstruktiv einfache Weise möglich, die Scheibendichtung zwischen der Außenseite des hinteren Dachteils und der Innenseite der Heckscheibe anzuordnen, so dass auch bei höheren Fahrgeschwindigkeiten die Dichtheit des Klappverdecks mit vertretbarem konstruktivem Aufwand gewährleistet werden kann.

Damit die Heckscheibe in der Verstaustellung des Klappverdecks ihre gegenüber dem hinteren Dachteil angehobene Position erreichen kann, muss diese bei der Überführung des Klappverdecks in seine Verstaustellung zumindest mit einem Teilbereich durch die Scheibenöffnung hindurchbewegt werden können. Hierzu ist es erfindungsgemäß vorgesehen, die Heckscheibe so gegenüber dem hinteren Dachteil anzuordnen bzw. zu bewegen, dass insbesondere die seitlichen C-Säulen an den zugeordneten seitlichen Scheibenrändern der Heckscheibe vorbei zu bewegen sind.

Besonders einfach kann eine Hindurchbewegung der Heckscheibe durch die Scheibenöffnung erreicht werden, wenn deren Scheibenschwenkachse in einem Abstand vor der Hauptschwenkachse des hinteren Dachteils angeordnet ist. Hierdurch kommen beispielsweise in der Schließstellung des Klappverdecks aufeinanderliegende Punkte der Heckscheibe und des hinteren Dachteils in der Verstaustellung in einem Abstand hintereinander zu liegen, so dass auf einfache Weise zumindest ein Teilbereich der Heckscheibe durch die Scheibenöffnung hindurchgeführt werden kann.

In weiterer Ausgestaltung der Erfindung hat sich insbesondere eine trapezförmige Heckscheibe als vorteilhaft gezeigt, deren in Schließstellung obere Trapezseite kürzer ausgebildet ist als deren untere Trapezseite. Werden demgemäß die in der Schließstellung übereinanderliegende Heckscheibe und die Scheibenöffnung in der Verstaustellung bezogen auf die Fahrzeuglängsrichtung in unterschiedliche Positionen gebracht, so kann ein der kürzeren Trapezseite zugeordneter Endbereich der Heckscheibe auf einfache Weise durch den .zugehörigen Bereich der Scheibenöffnung hindurchgeführt werden.

Als weiter vorteilhaft hat es sich gezeigt, sowohl die Hauptschwenkachse wie auch die Scheibenschwenkachse fest am Aufbau des Kraftwagens anzuordnen. Hierdurch ist es beispielsweise möglich, einen erheblichen Abstand zwischen den beiden Schwenkachsen zu realisieren, damit die Heckscheibe und das hintere Dachteil entlang von entsprechend unterschiedlichen Bewegungsbahnen verstellt werden können.

Ein leicht vormontierbares Klappverdeck kann dabei geschaffen werden, indem die Heckscheibe und das hintere Dachteil im Bereich der Scheibenschwenkachse bzw. der Hauptschwenkachse an seitlichen Konsolen gelagert sind, welche bei der Endmontage auf einfache Weise mit dem Aufbau des offenen Kraftwagens verbunden werden können.

Ein besonders betriebssicheres Hindurchführen der Heckscheibe durch die Scheibenöffnung bzw. ein sicheres Öffnen des Klappverdecks wird gewährleistet, indem zunächst die Heckscheibe vollständig in die Verstaustellung abgeklappt wird, bevor das hintere Dachteil aus der Schließstellung in die Verstaustellung überführt wird. Das Hindurchführen der Heckscheibe durch die Scheibenöffnung erfolgt dann durch ein Herumführen des hinteren Dachteils um die Heckscheibe während dessen Öffnungsbewegung.

Eine besonders sichere Anordnung der Heckscheibe innerhalb des Verdeckstauraums ist gegeben, wenn diese oberseitig durch ein oberes, vorzugsweise eigensteifes Dachteil des Klappverdecks überdeckt ist.

Schließlich kann eine Reduzierung der eingesetzten Bauteile und des benötigten Bauraums dadurch erreicht werden, dass ein gemeinsamer Antriebsmechanismus für das hintere Dachteil und die Heckscheibe eingesetzt wird.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Seitenansicht auf das erfindungsgemäße Klappverdeck für einen offenen Kraftwagen, von dem im Wesentlichen ein oberes Dachteil und ein eine Heckscheibe umfassendes hinteres Dachteil erkennbar sind;
- Fig. 2: eine schematische Rückansicht auf das Klappverdeck gemäß Fig. 1;
- Fig. 3: eine schematische Seitenansicht auf das Klappverdeck gemäß Fig. 1, wobei die Heckscheibe in eine zumindest annähernd horizontale Verstaustellung abgeklappt worden ist;
- Fig. 4: eine schematische Seitenansicht auf das Klappverdeck gemäß den Fig. 1 und 3 zu Beginn der Öffnungsbewegung der beiden Dachteile;
- Fig. 5: eine schematische Seitenansicht auf das Klappverdeck gemäß den Fig. 1, 3 und 4 im weiteren Verlauf der Öffnungsbewegung der beiden Dachteile;
- Fig. 6: eine schematische Seitenansicht auf das Klappverdeck gemäß den Fig. 1 und 3 bis 5 in einer Endphase der Öffnungsbewegung der beiden Dachteile;
- Fig. 7,: eine schematische Rückansicht auf das Klappverdeck, wobei die Heckscheibe bzw. die beiden Dachteile in der Position gemäß Fig. 6 angeordnet sind; und in
- Fig. 8: eine schematische Seitenansicht auf das Klappverdeck gemäß den Fig. 1 und 3 bis 6 in der innerhalb eines Heck- und Verdeckstauraums angeordneten Verstaustellung.

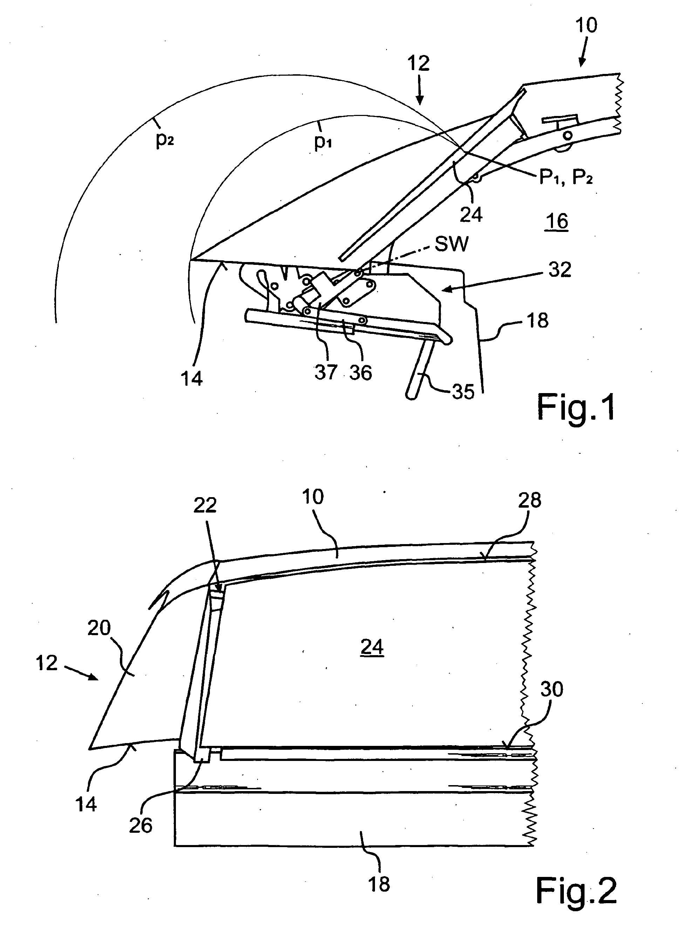

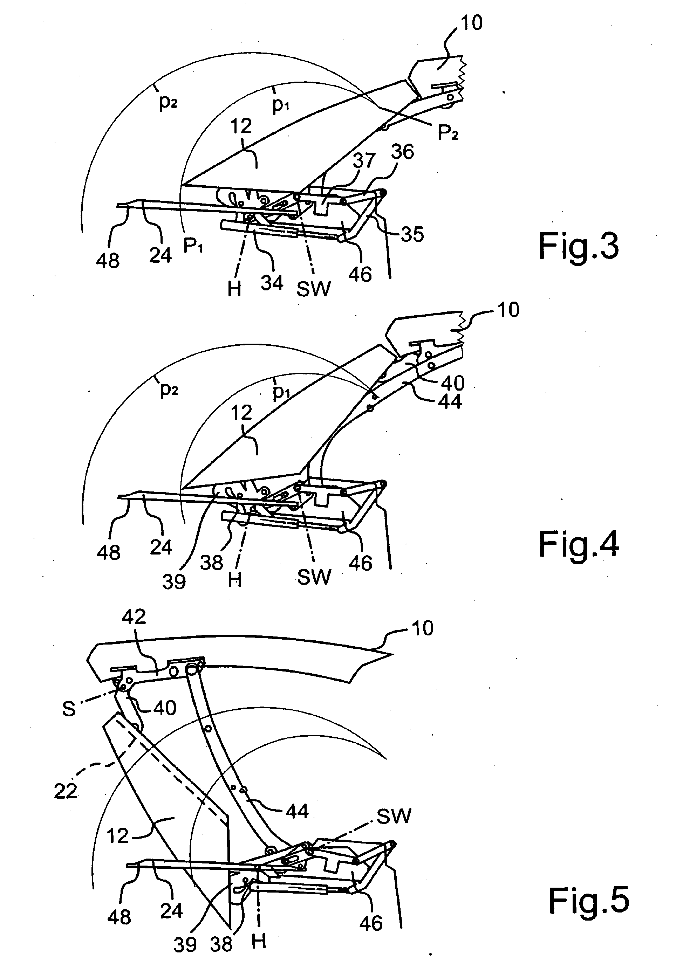

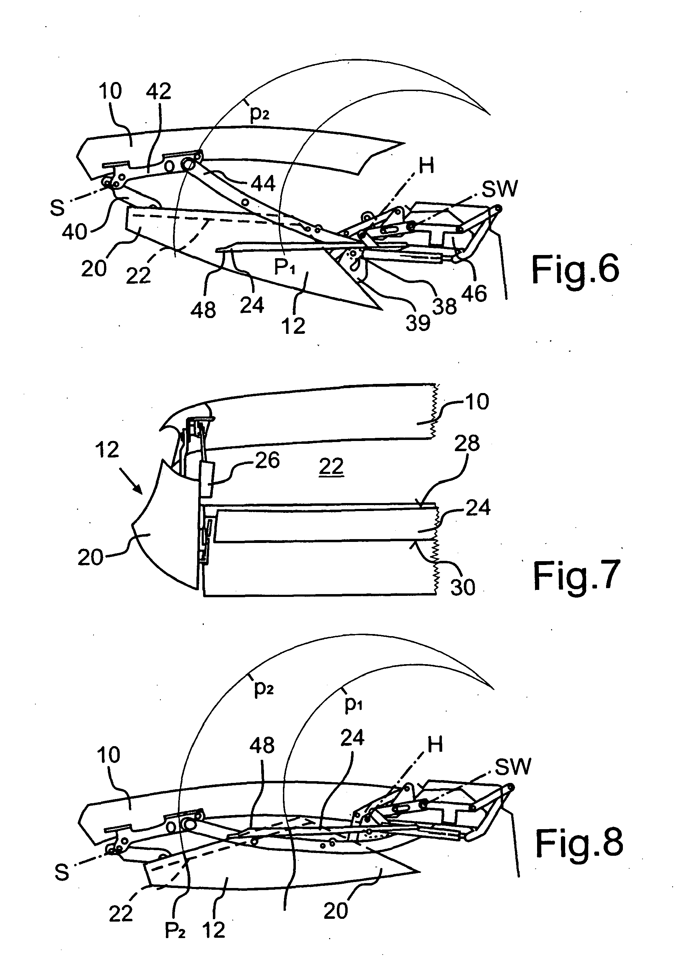

In den Fig. 1 und 2 ist in schematischer Seitenansicht bzw. Rückansicht ein Klappverdeck für einen offenen Kraftwagen dargestellt, welches ein sich an einen nicht dargestellten Windschutzscheibenrahmen anschließendes oberes Dachteil 10 sowie ein sich daran anschließendes hinteres Dachteil 12 umfasst. Die beiden Dachteile 10, 12 sind im vorliegenden Ausführungsbeispiel als eigensteife Schalenelemente aus Metallblech oder Kunststoff eines sogenannten Hardtops ausgebildet und an einer in Fahrzeugquerrichtung verlaufenden, insbesondere in den Fig. 5, 6 und 8. erkennbaren Schwenkachse S gelenkig miteinander verbunden. Gleichfalls wäre es jedoch auch denkbar, die Dachteile 10, 12 aus einem flexiblen Material herzustellen. Das hintere Dachteil 12 des hier in seiner Schließstellung dargestellten Klappverdecks endet dabei im Bereich einer Bordwandkante 14, auf deren Höhe sich auch ein in den Zeichnungen nicht dargestellter Heck- und Verdeckkastendeckel erstreckt. Die beiden Dachteile 10, 12 sind über zwei seitlich des Klappverdecks angeordnete, insbesondere aus Fig. 5 im Weiteren noch erkennbare Parallelogrammgestänge aus der in Fig. 1 dargestellten Schließstellung des Klappverdecks in eine in Fig. 8 dargestellte Verstaustellung überführbar. Der prinzipielle Aufbau und die Funktionsweise zur Überführung der beiden Dachteile 10, 12 in ihre Verstaustellung - mit Ausnahme der Funktionsweise zur Überführung der Heckscheibe - ist beispielsweise aus der DE 44 45 944 C1 oder der DE 44 45 580 C1 als bekannt zu entnehmen. In der Schließstellung überdecken die beiden Dachteile 10, 12 einen Fahrgastraum 16, der nach hinten hin im Bereich einer Hecktrennwand 18 begrenzt ist.

Wie insbesondere aus Fig. 2 erkennbar ist, begrenzen seitliche C-Säulen 20 des hinteren Dachteils 12 außenseitig eine Scheibenöffnung 22, innerhalb welcher eine Heckscheibe 24 in ihrer Schließstellung angeordnet ist. Die Heckscheibe 24 erstreckt sich nach oben hin bis etwa an das hintere Ende des oberen Dachteils 10 und nach unten hin bis etwa auf Höhe der hinteren Bordwandkante 14, wobei sich an das untere Ende der Heckscheibe 24 der nicht dargestellte Heck- und Verdeckstauraumdeckel anschließt. Nach oben hin kann die Scheibenöffnung 22 entweder durch das hintere Ende des oberen Dachteils 10 oder durch eine hier nicht erkennbare Verbindung der C-Säulen 20 des hinteren Dachteils 12 begrenzt sein. Insbesondere aus Fig. 2, ist dabei erkennbar, dass die C-Säulen 20 des hinteren Dachteils 12 in Fahrzeughochrichtung verlaufende Randbereiche 26 umfassen, an deren Außenseite eine in Fig. 2 nicht erkennbare Scheibendichtung angeordnet ist. Mit anderen Worten ist die Scheibendichtung zwischen der Außenseite der Randbereiche 26 und der Innenseite der Heckscheibe 24 angeordnet. Außerdem ist aus Fig. 2 erkennbar, dass die durch die Randbereiche 26 der C-Säulen 20 seitlich begrenzte Scheibenöffnung 22 - in Fahrzeugquerrichtung betrachtet - kleiner bzw. schmaler ausgebildet ist als die Heckscheibe 24. Weiterhin ist aus Fig. 2 erkennbar, dass die Heckscheibe 24 im Wesentlichen trapezförmig gestaltet ist, wobei eine obere Trapezseite 28 schmaler bzw. kürzer ausgebildet ist als eine längere untere Trapezseite 30. Innenseitig der oberen Trapezseite 28 bzw. der unteren Trapezseite 30 ist ebenfalls eine Scheibendichtung vorgesehen, welche außenseitig des angrenzenden oberen Dachteils 10 bzw. außenseitig eines Karosserieteils im Bereich der Bordwandkante 14 angeordnet sind.

In Fig. 3 ist in schematischer Seitenansicht das Klappverdeck gemäß Fig. 1 dargestellt, wobei die Heckscheibe 24 aus ihrer die Scheibenöffnung 22 überdeckenden Schließstellung gemäß Fig. 2 in eine Offen- bzw. Verstaustellung verschwenkt worden ist, in welcher sie etwa waagerecht zu liegen kommt. Hierzu umfasst ein Antriebsmechanismus 32 zwei beidseitig des Klappverdecks angeordnete Stellantriebe 34 in Form von Hydraulikzylindern, welche jeweils über eine mehrere Hebel 35, 36, 37 umfassende Kniehebelanordnung mit der Heckscheibe 24 verbunden sind. In Zusammenschau von Fig. 1 mit Fig. 3 ist erkennbar, dass hierzu der Hebel 35 mittels des zugehörigen Stellantriebs 34 um etwa eine halbe Umdrehung im Urzeigersinn verdreht worden ist. Demgemäß sind die Hebel 36 und 37 mitgeschleppt worden, wodurch die Heckscheibe 24 um eine Scheibenschwenkachse SW in ihre waagrechte Verstaustellung abgeklappt worden ist. In der Verstaustellung ist die Heckscheibe 24 beispielsweise über Gummipuffer oder dergleichen Halteelemente innerhalb des Versteckstauraums des Klappverdecks gehalten. In der Schließstellung des Klappverdecks sind die Hebel 35, 36, 37 in einer Totpunktlage zueinander angeordnet, wodurch die Heckscheibe 24 sicher gegen ihre Scheibendichtung gedrückt ist.

Fig. 4 zeigt in schematischer Seitenansicht das Klappverdeck gemäß den Fig. 1 und 3, bei welchem nach Abschluss des Verschwenkens der Heckscheibe 24 nun die beiden Dachteile 10, 12 aus ihrer Schließstellung in die in Fig. 8 dargestellte Verstaustellung überführt werden. Hierzu dienen ebenfalls die außenseitig des Klappverdecks angeordnete Stellantriebe 34, welche bereits zur Überführung der Heckscheibe 24 in ihre Verstaustellung genutzt worden sind. Nachdem der Kniehebelmechanismus mit den Hebeln 35, 36, 37 nach Erreichen der Verstaustellung der Heckscheibe 24 eine Endlage eingenommen hat, wird der jeweilige Stellantrieb 34 am ortsfest verbleibenden Hebel 35 gehalten. Zur Überführung der beiden Dachteile 10, 12 in die Verstaustellung verkürzt sich der Stellantrieb 34, der seinerseits über einen Zwischenhebel 38 mit dem zugehörigen Parallelogrammgestänge der beiden Dachteile 10, 12 verbunden ist. Hierdurch werden die beiden Dachteile 10, 12 um eine Hauptschwenkachse H des hinteren Dachteils 12 verschwenkt. Das Parallelogrammgestänge besteht dabei im Wesentlichen aus einem hinteren Hauptlenker, der im vorliegenden Ausführungsbeispiel von zwei Teillenkern 39, 40 gebildet wird, die in einem mittleren Bereich über das eigensteife, feste hintere Dachteil 12 miteinander verbunden sind. Der erste Teillenker 39 erstreckt sich dabei am unteren Ende des hinteren Dachteils 12 bis zur Hauptschwenkachse H, während sich der zweite Teillenker 40 am oberen Ende des hinteren Dachteils 12 bis zur Schwenkachse S zwischen den beiden Dachteilen 10, 12 erstreckt. Der Zwischenhebel 38 zum Antrieb der beiden Dachteile 10, 12 greift dabei am ersten Teillenker 39 an. Als weitere Bauteile des jeweils seitlich vorgesehenen Parallelogrammgestänges ist ein oberes Zwischenteil 42 sowie ein gelenkig mit diesem verbundener Hauptlenker 44 erkennbar, der mit seinem unteren Ende an einer Konsole 46 gelagert ist.

In Zusammenschau mit den Fig. 5, 6 und 8, welche jeweils in schematischer Seitenansicht das Klappverdeck darstellen, wird der weitere Verlauf der Überführung der beiden Dachteile 10, 12 in ihre Verstaustellung erkennbar. So zeigt Fig. 5 eine mittlere und Fig. 6 eine Endphase der Überführung der beiden Dachteile 10, 12 in die Verstaustellung. In Fig. 8 sind dann die beiden Dachteile 10, 12 - gemeinsam mit der Heckscheibe 24 - in ihrer endgültigen Verstaustellung überführt. Da die Scheibenschwenkachse SW der Heckscheibe 24 in einem erheblichen Abstand vor der Hauptschwenkachse H des hinteren Dachteils 12 bzw. insbesondere der C-Säulen 20 angeordnet ist, bewegen sich beispielweise zwei Punkte P₁, P₂ der Heckscheibe bzw. der C-Säulen 20 des hinteren Dachteils 12, welche in der Schließstellung gemäß Fig. 1 deckungsgleich aufeinanderliegen, auf unterschiedlichen Bewegungsbahnen p₁, p₂ in Richtung nach hinten in ihre Verstaustellung. Während sich nämlich der Punkt P₁ der Heckscheibe 24 entlang der Bahnkurve p₁ aus der Schließstellung gemäß Fig. 1 in die Verstaustellung gemäß Fig. 3 bewegt, wird der mit dem Punkt P₁ deckungsgleiche Punkt P₂ des hinteren Dachteils 12 aus seiner in Fig. 1 dargestellten Schließstellung in die in Fig. 8 dargestellte Verstaustellung entlang der Bahnkurve p₂ überführt. Mit anderen Worten durchlaufen die beiden in der Schließstellung der Heckscheibe 24 bzw. des hinteren Dachteils 12 deckungsgleichen Punkte P₁, P₂ Bewegungsbahnen p₁, p₂ mit unterschiedlichen Radien. Da die Scheibenschwenkachse SW und die Hauptschwenkachse H der Heckscheibe 24 bzw. des hinteren Dachteils 12 darüber hinaus in Fahrzeughochrichtung in unterschiedlichen Höhen angeordnet sind, ergibt sich für die Punkte P₁ und P₂ eine unterschiedliche Steigung zu Beginn der Überführung aus der Schließstellung in die Verstaustellung. Während der Punkt P₁ der Heckscheibe zu Beginn der Öffnungsbewegung mit einer relativ geringen Steigung entlang der Bewegungsbahn p₁ bewegt wird, weist die Bewegungsbahn p₂ des Punktes P₂ des hinteren Dachteils 12 zu Beginn der Öffnungsbewegung eine wesentlich größere Steigung auf.

Als Resultat der unterschiedlichen Positionen der Schwenkachsen SW, H der Heckscheibe 24 bzw. des hinteren Dachteils 12 wird auch die seitlich durch die C-Säulen 20 begrenzte Scheibenöffnung 22 innerhalb des hinteren Dachteils 12 gegenüber der Heckscheibe 24 weiter nach hinten verlagert. Wie insbesondere aus den Fig. 6 und 8 erkennbar ist, kommt die Heckscheibe 24 mit ihrem oberen bzw. hinteren Endbereich 48 - in Fahrzeuglängsrichtung gesehen - in einem deutlichen Abstand vor den zugehörigen Punkten des hinteren Dachteils 12 zu liegen. Da die Heckscheibe 24 und die zugehörige Scheibenöffnung 22 im Wesentlichen trapezförmig ausgestaltet sind, ergibt sich durch die - in Fahrzeuglängsrichtung betrachtet - unterschiedliche Ablage der Heckscheibe 24 bzw. des hinteren Dachteils 12 mit der Scheibenöffnung 22 nicht nur ein Versatz in Fahrzeuglängsrichtung, sondern - wie aus Fig. 7 erkennbar - auch ein Versatz in Fahrzeugquerrichtung. Demgemäß zeigt Fig. 7 in schematischer Rückansicht das Klappverdeck gemäß Fig. 6, wobei insbesondere erkennbar wird, dass die Randbereiche 26 der C-Säulen 20 des hinteren Dachteils 12 im Verlauf der Öffnungsbewegung des Klappverdecks an der sich bereits in ihrer Verstaustellung befindenden Heckscheibe 24 vorbeigeführt werden können. Dabei ist aus Fig. 7. erkennbar, dass das hintere Dachteil 12 gegenüber der Heckscheibe 24 um einen derartigen Abstand weiter nach hinten verlagerbar ist, dass die Randbereiche 26 der C-Säulen 20 um die Heckscheibe 24 herumgeführt bzw. durch diese durch die Scheibenöffnung 22 hindurchgeführt werden kann. Im Ergebnis kommt die Heckscheibe 24 in der Verstaustellung des Klappverdecks somit oberhalb der Scheibenöffnung 22 - im Wesentlichen zwischen dem hinteren und dem oberen Dachteil 10, 12 zu liegen. Mit anderen Worten ermöglicht die unterschiedliche Anordnung der Scheibenschwenkachse SW der Heckscheibe 24 und der Hauptschwenkachse H des hinteren Dachteils 12 eine Anhebung der Heckscheibe 24 in Richtung des diese überdeckenden oberen Dachteils 10, so dass innerhalb des nicht dargestellten Verdeckstauraums mehr Platz bei geöffnetem Klappverdeck verbleibt. Darüber hinaus ist die Heckscheibe 24 nahe des oberen Dachteils 10 in einer sichereren Lage angeordnet, so dass beispielsweise innerhalb des Verdeck- und Kofferraums angeordnete Güter nicht zu einer Beschädigung der Heckscheibe 24 führen können.

Als im Rahmen der Erfindung mitumfasst ist es zu betrachten, dass die Heckscheibe 24 und beiden Dachteile 10, 12 auch über separate Antriebsmechanismen 32 betrieben werden können. Gleichfalls als mitumfasst ist es zu betrachten, dass die Heckscheibe 24 nicht zwingendermaßen vollständig abgelegt sein muss, bevor das Öffnen der beiden Dachteile 10, 12 beginnen kann. Gleichfalls wäre es natürlich auch denkbar, die Heckscheibe 24 und die beiden Dachteile 10, 12 in einer überlagerten Bewegung zu öffnen. In diesem Fall müsste jedoch darauf geachtet werden, dass die Heckscheibe 24 durch die Scheibenöffnung 22 hindurchgeführt werden kann und zudem die beiden Dachteile 10, 12 nicht berührt. Um den Fahrgastraum 16 mit Frischluft zu versorgen, wäre es zudem denkbar, die Heckscheibe 24 unabhängig von einer Öffnungs- und Schließbewegung des Klappverdecks öffenbar auszubilden.

## Patentansprüche

1. Klappverdeck für einen Kraftwagen mit einem eine Scheibenöffnung (22) für eine Heckscheibe (24) begrenzenden hinteren Dachteil (12), welches zur Überführung des Klappverdecks aus einer Schließstellung in eine Verstaustellung um eine Hauptschwenkachse (H) zu verlagern ist, wobei die Heckscheibe (24) gegenüber dem hinteren Dachteil (12) um eine Scheibenschwenkachse (SW) zu schwenken ist, die in einem Abstand zur Hauptschwenkachse (H) verläuft,
**dadurch gekennzeichnet,**
**dass** die Heckscheibe (24) in der Schließstellung des Klappverdecks von der Außenseite her an dem hinteren Dachteil (12) anliegt und nach der Überführung des Klappverdecks in seine Verstaustellung zumindest mit einem Teilbereich durch die Scheibenöffnung (22) hindurch bewegt ist.

2. Klappverdeck nach Anspruch 1,
**dadurch gekennzeichnet,**
**dass** die Scheibenschwenkachse (SW) der Heckscheibe (24) in einem Abstand vor der Hauptschwenkachse (H) des hinteren Dachteils (12) angeordnet ist.

3. Klappverdeck nach Anspruch 1,
**dadurch gekennzeichnet,**
**dass** das hintere Dachteil (12) und/oder die Heckscheibe (24) entlang einer zugeordneten Bahnkurve (p₁, p₂) um die Hauptschwenkachse (H) beziehungsweise die Scheibenschwenkachse (SW) zu verlagern ist, wobei die Bahnkurve (p₁) der Heckscheibe (24) in Fahrzeuglängsrichtung vor der Bahnkurve (p₂) des hinteren Dachteils (12) verläuft.

4. Klappverdeck nach Anspruch 1,
**dadurch gekennzeichnet,**
**dass** die die Scheibenöffnung (22) abdeckende Heckscheibe (24) im Wesentlichen trapezförmig gestaltet ist, wobei eine obere Trapezseite (28) kürzer ausgebildet ist als eine untere Trapezseite (30).

5. Klappverdeck nach Anspruch 1,
**dadurch gekennzeichnet,**
**dass** ein oberes Ende der Heckscheibe (24) in der Verstaustellung des Klappverdecks in einem Abstand vor einem zugeordneten oberen Ende der Scheibenöffnung (22) zu liegen kommt.

6. Klappverdeck nach Anspruch 1,
**dadurch gekennzeichnet,**
**dass** die Heckscheibe (24) fest am Aufbau des Kraftwagens gelagert ist.

7. Klappverdeck nach Anspruch 6,
**dadurch gekennzeichnet,**
**dass** die Heckscheibe (24) und das hintere Dachteil (12) an seitlichen, am Aufbau des Kraftwagens festgelegten Konsolen (46) gelagert sind.

8. Klappverdeck nach Anspruch 1,
**dadurch gekennzeichnet,**
**dass** die Heckscheibe (24) zumindest annähernd vollständig in die Verstaustellung abklappbar ist, bevor das hintere Dachteil (12) aus der Schließstellung in die Verstaustellung zu überführen ist.

9. Klappverdeck nach Anspruch 1,
**dadurch gekennzeichnet,**
**dass** die Heckscheibe (24) in ihrer Verstaustellung im Wesentlichen zumindest annähernd horizontal verläuft.

10. Klappverdeck nach Anspruch 1,
**dadurch gekennzeichnet,**
**dass** die Heckscheibe (24) in ihrer Verstaustellung unterhalb eines oberen Dachteils (10) des Klappverdecks angeordnet ist.

11. Klappverdeck nach Anspruch 1,
**dadurch gekennzeichnet,**
**dass** bei der Überführung des Klappverdecks in die Verstaustellung die Bahnkurve (p₂) eines Punktes (P₂) am oberen Ende der Scheibenöffnung (22) zumindest bereichsweise außerhalb der Bahnkurve (p₁) eines zugehörigen Punktes (P₁) am oberen Ende der Heckscheibe (24) verläuft.

12. Klappverdecks nach Anspruch 1,
**dadurch gekennzeichnet,**
**dass** eine Scheibendichtung der Heckscheibe (24) zumindest im Bereich von C-Säulen (20) des hinteren Dachteils (12) angeordnet ist.

13. Klappverdeck nach Anspruch 1,
**dadurch gekennzeichnet,**
**dass** das hintere Dachteil (12) und die Heckscheibe (24) über einen gemeinsamen Antriebsmechanismus (32) zu bewegen sind.

14. Klappverdeck nach Anspruch 1,
**dadurch gekennzeichnet,**
**dass** die Heckscheibe (24) unabhängig vom hinteren Dachteil (12) zu bewegen ist.

15. Klappverdeck nach Anspruch 1,
**dadurch gekennzeichnet,**
**dass** die Scheibenöffnung (22) für die Heckscheibe (24) durch ein oberes Dachteil (10) des Klappverdecks begrenzt ist.

16. Klappverdeck nach Anspruch 1,
**dadurch gekennzeichnet;**
**dass** die Scheibenöffnung (22) für die Heckscheibe (24) durch eine Verbindung von C-Säulen (20) des hinteren Dachteils (12) begrenzt ist.

17. Klappverdeck nach Anspruch 1,
**dadurch gekennzeichnet,**
**dass** das hintere Dachteil (12) und/oder ein vorderes Dachteil (10) mehrteilig und/oder aus flexiblem Material ausgeführt sind.

18. Klappverdecks nach Anspruch 1,
**dadurch gekennzeichnet,**
**dass** Hebel (35, 36, 37) eines Antriebesmechanismus der Heckscheibe (24) in der Schließstellung des Klappverdecks in einer Totpunktlage zueinander angeordnet sind, wodurch die Heckscheibe (24) sicher gegen ihre Scheibendichtung gedrückt ist.

## Claims

1. Folding top for a motor vehicle, comprising a rear roof part (12) which bounds a window opening (22) for a rear window (24) and which is displaceable about a main pivot axis (H) in order to transfer the folding top from a closed position into a stowage position, wherein the rear window (24) is pivotable, relative to the rear roof part (12) about a window pivot axis (SW) extending at a distance from the main pivot axis (H),
**characterised in that**
the rear window (24) bears against the rear roof part (12) from the outside in the closed position of the folding top, and **in that** at least a part thereof is moved through the window opening (22) after the folding top has been transferred into its stowage position.

2. Folding top according to claim 1,
**characterised in that**
the window pivot axis (SW) of the rear window (24) is arranged at a distance from the main pivot axis (H) of the rear roof part (12).

3. Folding top according to claim 1,
**characterised in that**
the rear roof part (12) and/or the rear window (24) is/are displaceable along an assigned path curve (p₁, p₂) about the main pivot axis (H) or the window pivot axis (SW) respectively, the path curve (p₁) of the rear window (24) lying in front of the path curve (p₂) of the rear roof part (12) in the longitudinal direction of the vehicle.

4. Folding top according to claim 1,
**characterised in that**
the rear window (24) covering the window opening (22) is substantially trapezoidal, an upper side (28) of the trapezium being shorter than a lower side. (30).

5. Folding top according to claim 1,
**characterised in that**
an upper end of the rear window (24) comes to lie at a distance in front of an associated upper end of the window opening (22) in the stowage position of the folding top.

6. Folding top according to claim 1,
**characterised in that**
the rear window (24) is securely mounted on the body of the motor vehicle.

7. Folding top according to claim 6.
**characterised in that**
the rear window (24) and the rear roof part (22) are mounted on lateral brackets (46) fixed to the body of the motor vehicle.

8. Folding top according to claim 1,
**characterised in that**
the rear window (24) can be folded at least almost completely into the stowage position before the rear roof part (12) is transferred from the closed position into the stowage position.

9. Folding top according to claim 1,
**characterised in that**
the rear window (24) lies at least approximately horizontally in its stowage position.

10. Folding top according to claim 1,
**characterised in that**
the rear window (24) lies below an upper roof part (10) of the folding top in its stowage position.

11. Folding top according to claim 1,
**characterised in that**
when the folding top is transferred into the stowage position, at least a section of the path curve (p₂) of a point (P₂) at the upper end of the window opening (22) runs outside the path curve (p₁) at a corresponding point (P₁) at the upper end of the rear window (24).

12. Folding top according to claim 1,
**characterised in that**
a window seal of the rear window (24) is provided at least in the region of C-posts (20) of the rear roof part (12).

13. Folding top according to claim 1,
**characterised in that**
the rear roof part (12) and the rear window (24) are movable by means of a common drive mechanism (32).

14. Folding top according to claim 1,
**characterised in that**
the rear window (24) is movable independently of the rear roof part (12).

15. Folding top according to claim 1,
**characterised in that**
the window opening (22) for the rear window (24) is bounded by an upper roof part (10) of the folding top.

16. Folding top according to claim 1,
**characterised in that**
the window opening (22) for the rear window (24) is bounded by a link of C-posts (20) of the rear roof part (12).

17. Folding top according to claim 1,
**characterised in that**
the rear roof part (12) and/or a front roof part (10) are of a multipart design and/or made of a flexible material.

18. Folding top according to claim 1,
**characterised in that**
levers (35, 36, 37) of a drive mechanism of the rear window (24) are in a dead centre position relative to one another in the closed position of the folding top, whereby the rear window (24) is securely pressed against its window seal.

## Revendications

1. Toit décapotable pour un véhicule automobile avec une partie arrière de toit (12) délimitant une ouverture de vitre (22) pour une vitre arrière (24), qui peut être déplacée pour le transfert du toit décapotable d'une position de fermeture à une position de rangement autour d'un axe de pivotement principal (H), la vitre arrière (24) pouvant être déplacée par rapport la partie de toit arrière (12) autour d'un axe de picotement de la vitre (SW), qui s'étend dans un espace par rapports à l'axe de picotement principal (H),
**caractérisé en ce que**
la vitre arrière (24) est, dans la position de fermeture du toit décapotable depuis la face externe, en appui sur la partie arrière de toit (12) et est, après le transfert du toit décapotable dans sa position de rangement, déplacée au moines partiellement au travers de l'ouverture de vitre (22).

2. Toit décapotable selon la revendication 1,
**caractérisé en ce que**
l'axe de pivotement de la vitre (SW) de la vitre arrière (24) est disposé avec un espacement devant l'axe de pivotement principal (H) de la partie arrière de toit (12).

3. Toit décapotable selon la revendication 1,
**caractérisé en ce que**
la partie arrière de toit (12) et/ou la vitre arrière (24) peut être déplacée le long d'une trajectoire (p₁, p₂) autour
de l'axe de pivotement principal (H) et/ou autour de l'axe de pivotement de la vitre (SW), la trajectoire (p₁) de la vitre arrière (24) passant dans la direction longitudinale du véhicule devant la trajectoire (p₂) de la partie arrière de toit (12).

4. Toit décapotable selon la revendication 1,
**caractérisé en ce que**
la vitre arrière (24) couvrant l'ouverture de vitre (22) est configurée quasiment de manière trapézoïdale, un coté supérieur du trapèze (28) étant façonné plus court qu'un coté de trapèze inférieur (30).

5. Toit décapotable selon la revendication 1,
**caractérisé en ce que**
une extrémité supérieure de la vitre arrière (24) vient reposer, dans la position de rangement du toit décapotable, dans un espace situé devant une extrémité supérieure correspondante à l'ouverture de vitre (22).

6. Toit décapotable selon la revendication 1,
**caractérisé en ce que**
la vitre arrière (24) est montrée fixement sur la carrosserie du véhicule automobile.

7. Toit décapotable selon la revendication 6,
**caractérisé en ce que**
la vitre arrière (24) et la partie arrière de toit (12) sont montées sur des consoles (46) latérales, qui sont fixées sur la carrosserie du véhicule automobile.

8. Toit décapotable selon la revendication 1,
**caractérisé en ce que**
la vitre arrière (24) est presque entièrement rabattable dans la position de rangement, avant que la partie arrière de toit (12) soit déplacée d'une position de fermeture à une position de rangement.

9. Toit décapotable selon la revendication 1,
**caractérisé en ce que**
la vitre arrière (24) s'étend dans sa position de rangement quasiment de manière horizontale.

10. Toit décapotable selon la revendication 1,
**caractérisé en ce que**
la vitre arrière (24) est disposée dans sa position de rangement en dessous d'une partie supérieure de toit (10) du toit décapotable.

11. Toit décapotable selon la revendication 1,
**caractérisé en ce que**
lors du transfert du toit décapotable dans la position de rangement ia trajectoire (p₂) d'un point (P₂) sur l'extrémité supérieure de l'ouverture de vitre (22) s'inscrit au moins par endroits en dehors de la trajectoire (p₁) d'un point correspondant (P₁) sur l'extrémité supérieurs de la vitre arrière (24).

12. Toit décapotable selon la revendication 1,
**caractérisé en ce que**
un joint de vitre de la vitre arrière (24) est disposé à tout le moins à proximité des montants C (20) de la partie arrière de toit (12).

13. Toit décapotable selon la revendication 1,
**caractérisé en ce que**
la partie arrière de toit (12) et la vitre arrière (24) peuvent être articulées à l'aide d'un mécanisme d'entrainement commun (32).

14. Toit décapotable selon la revendication 1,
**caractérisé en ce que**
la vitre arrière (24) peut être articulée indépendamment de la partie arrière de toit (12),

15. Toit décapotable selon la revendication 1,
**caractérisé en ce que**
l'ouverture de vitre (22) pour la vitre arrière (24) est délimitée par une partie supérieur de toit (10) du toit décapotable,

16. Toit décapotable selon la revendication 1,
**caractérisé en ce que**
l'ouverture de vitre (22) pour la vitre arrière (24) est délimitée par une connexion des montants C (20) de la partie arrière de toit (12),

17. Toit décapotable selon la revendication 1,
**caractérisé en ce que**
la partie arrière de toit (12) et /ou une partie antérieure de toit (10) sont conçues en plusieurs parties et/ou en un matériau souple.

18. Toit décapotable selon la revendication 1,
**caractérisé en ce que**
des leviers (35, 36, 37) d'un mécanisme d'entrainement de la vitre arrière (24), soit, au point mort dans la position de fermeture du toit décapotable, disposés l'un par rapport à l'autre de manière à ce que la vitre arrière (24) est pressée de manière sûre contre son joint de vitre.
